**Europäisches Patentamt**

**European Patent Office**

**Office européen des brevets**

(19)

(11) Veröffentlichungsnummer : **0 344 582 B1**

(12)

# EUROPÄISCHE PATENTSCHRIFT

(45) Veröffentlichungstag der Patentschrift :
18.09.91 Patentblatt 91/38

(51) Int. Cl.⁵ : **F16L 29/00, F16K 41/10**

(21) Anmeldenummer : **89109300.7**

(22) Anmeldetag : **23.05.89**

(54) **Kupplung für Rohre und Schläuche für aggressive Flüssigkeiten.**

(30) Priorität : **03.06.88 DE 3819024**

(43) Veröffentlichungstag der Anmeldung :
**06.12.89 Patentblatt 89/49**

(45) Bekanntmachung des Hinweises auf die
Patenterteilung :
**18.09.91 Patentblatt 91/38**

(84) Benannte Vertragsstaaten :
**AT BE CH DE ES FR GB GR IT LI LU NL SE**

(56) Entgegenhaltungen :
**DE-A- 3 439 876**
**FR-A- 1 194 058**
**US-A- 3 744 751**

(73) Patentinhaber : **EM-Technik GmbH
Armaturenbau Industriestrasse 2
W-6701 Maxdorf (DE)**

(72) Erfinder : **Meier, Norbert
Im Horst 4
W-6701 Maxdorf (DE)**

(74) Vertreter : **Patentanwälte Zellentin & Partner
Rubensstrasse 30
W-6700 Ludwigshafen (DE)**

EP 0 344 582 B1

## Beschreibung

Insbesondere in der Halbleiterindustrie werden für Rohre und Schläuche Kupplungen mit axialer Flüssigkeitsführung benötigt, die sich von herkömmlichen Kupplungen dadurch unterscheiden, daß sie völlig metall- (also auch stahl- und edelstahl)frei sein müssen, da bereits geringste Metallspuren als Verunreinigung der transportierten Flüssigkeit auszuschließen sind. (Unter Flüssigkeit wird dabei ggf. auch ein Gas verstanden).

Sie müssen daher aus resistenten Kuntstoffen hergestellt werden, nur O-Ringe — falls überhaupt — aus PTFE besitzen und so konstruiert sein, daß die Fließfähigkeit möglichst nicht durch Ecken, Kanten und Absätze gestört wird. Beim Koppeln soll möglichst keine Leckage entstehen.

Aus der FR-A-1194058 ist eine Ventilvorrichtung bekannt, in der die Feder des Ventils in einem Faltenbalg untergebracht ist. Dabei weist der Faltenbalg einen Kragen auf und ist mit Hilfe einer Hülse gegen eine Plätte im Preßsitz gehalten. Die Platte ihrerseits weist eine Bohrung auf, die von einer Stange durchgriffen ist, die endseitig den Ventilteller trägt.

Der Stand der Technik wird jedoch der vorgenannten Aufgabe nicht gerecht. Zum einen kann hier Flüssigkeit nur von der Platte im rechten Winkel nach außen geführt werden, zum anderen läßt sich die Stange in der Platte nicht befriedigend abdichten, so daß Flüssigkeit an die metallische Feder gelangen kann, die Flüssigkeitsführung daher nicht im gewünschten Maße metallfrei ist.

Der Faltenbalg selbst kommt hierbei mit Flüssigkeit nicht in Berührung.

Die Lösung der oben genannten Aufgabe gelingt mit Hilfe einer Kupplung gemäß Anspruch 1.

Der Faltenbalg umschließt die Feder zusammen mit der Platte vollständig, so daß eine Berührung mit der aggressiven Flüssigkeit des Rohrleitungssystems ausgeschlossen ist. Die Konstruktion des Faltenbalges ist unaufwendig, die bodenseitige Abdichtung geschieht durch das Einklemmen des Kragens zwischen zwei Kunststoffteilen der Hülse und der Platte, die vorzugsweise in das innen an den Kupplungskörper angeformte oder hier befestigte Innengewindestück eingeschraubt werden, wobei letzteres periphere koaxiale Kanäle zur Innenwandung des Kupplungskörpers freiläßt.

Der Faltenbalg kann vom Ventilkegel getrennt ausgebildet sein. Da der Ventilkegel unter Federdruck an einem entsprechenden Gegenkegel der Kupplungsmündung anliegt und beim Öffnen, d.h. Zurückschieben dieser Druckfeder noch verstärkt wird, müssen die Teile grundsätzlich nicht aneinander befestigt sein. Besonders bevorzugt wird jedoch eine Ausführungform, bei welcher Ventilkegel und Faltenbalg einstückig aus Kunststoff (Polytetrafluorethylen) ausgebildet sind, d.h. insbesondere (aus dem Vollen) gedreht sind. Da die Öffnungs- und Schließwege relativ kurz sein können, wird an die Elastizität des Balges keine erhöhte Anforderung gestellt.

Der Faltenbalg kann zwischen dem angeformten Kragen und dem eigentlichen zieharmonikaartigen Teil einen zylindrischen Bereich aufweisen, der einmal an der Innenwandung der Hülse anliegt und der andererseits durch die innen liegende Feder gegen die Hülse gedrückt wird, so daß ein spaltfreier Übergang vom oberen Hülsenrand in den Flüssigbeit führenden Bereich des Ventils gewährleistet ist. Der zylindrische Bereich kann insbesondere hierbei verstärkt sein.

Grundsätzlich kann ein derartiges Kupplungsteil für sich allein eingesetzt werden, wobei das zu verschraubende einzusteckende oder zu verklemmende Gegenstück lediglich einen zentralen Dorn aufzuweisen braucht, der beim Schließen den Ventilkegel gegen die Federspannung zurückschiebt.

Vorzuziehen ist jedoch eine Konstruktion aus zwei gleich wirkenden Kupplungsteilen der vorbeschriebenen Art, um ein Herauslaufen von Flüssigkeit aus der gegenüberliegenden Leitung zu verhindern. Da hierbei zwei Kegel gegen die jeweilige Federspannung zu öffnen sind, wird erfindungsgemäß vorgeschlagen, die Federn ungleich stark auszubilden, und die schwächere mit einem Anschlag zu versehen, der nach Erreichen der Anschlagstellung die stärkere Feder zurückdrückt. Eine besonders einfache Lösung besteht zu diesem Zwecke darin, den Anschlag insbesondere in die Platte einzuschrauben, an der die Feder anliegt. Über das Gewinde kann so z.B. eine Justierung vorgenommen werden. Der Anschlag liegt in der Offenstellung entweder an der Rückseite des Ventilkegels oder an einem an dieser angeformten oder angebrachten Stößel an.

Zur Montageerleichterung wird vorgeschlagen, die Hülse mit einem ringförmig auf der Hülse aufliegenden Anschlag zu versehen, der einmal über die Flächenpressung die Hülse fixiert und zum anderen abgerundet sein kann, um in der Strömung liegende Kanten zu vermeiden.

Im Schließzustand liegt der Ventilkegel gegen einen entsprechenden Gegenkegel jedoch nicht vollflächig an, so daß beim Zurückschieben um den Schließweg ein Ringspalt frei wird. Die Kegel weisen dazu vorzugsweise zylindrische Fortsätze auf, deren Länge dem Schließweg entspricht und die von einer entsprechenden Einschnürung des Schließteils des Kupplungskörpers mit radialem Abstand umgriffen werden, um das hier auftretende Totvolumen zu begrenzen.

Um das gegenseitige Öffnen der Ventilkegel beim Schließen der Kupplungsteile zu präzisieren, weisen die Kegel einander zugekehrte ineinandergreifende Führungsteile auf. Um die Montage des Faltenbalges zu erleichtern und durch eine Zwangsführung die Dichtigkeit des die Feder umschließenden Faltenbalges zu erhöhen, weist die Platte eine Ringnut auf, in die der untere, d.h. dem Ventilkegel gegenüberliegende Rand des Faltenbalges hineingreift. Dieserart wird der Faltenbalg in eine feste Position gezwungen und kann beim Einspannen seines Kragens zwischen Hülse und Platte nicht verrutschen.

Um das Totvolumen weiter einzuschränken wird letzlich vorgeschlagen in einer Ausnehmung eines Ventilteils einen gefederten Dichtring anzuordnen, der beim Schließen der Kupplung zurückgeschoben wird und beim Öffnen in das Totvolumen zurückfedert.

Anhand der beiligenden Figur wird die vorliegende Erfindung näher erläutert.

Fig. 1    zeigt eine erfindungsgemäße Kupplung im Längsschnitt

Fig. 2    zeigt eine solche Kupplung im Querschnitt

Fig. 3    zeigt eine Kupplungskombination in gekuppeltem Zustand.

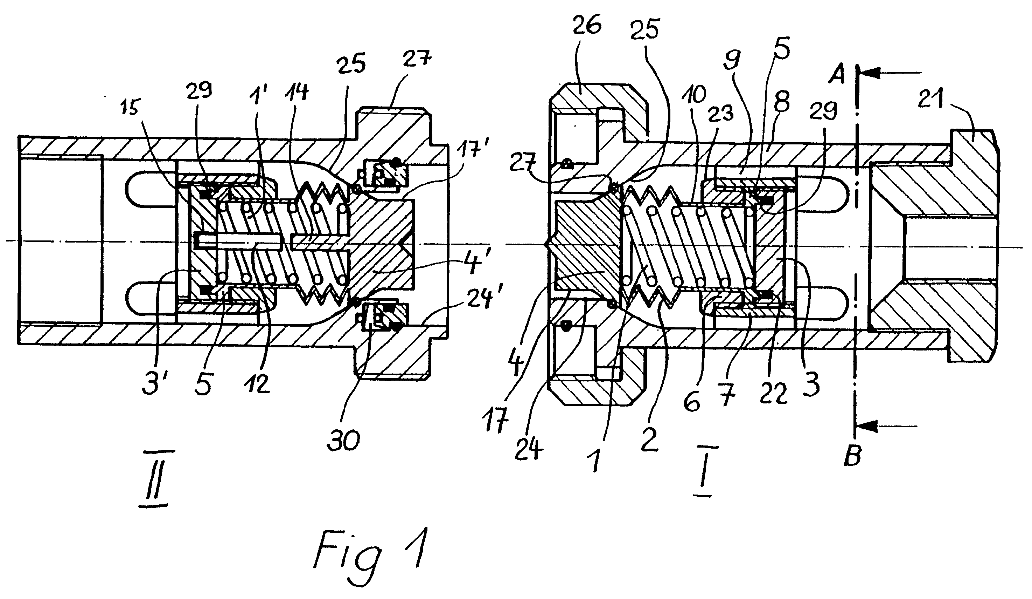

In **Fig. 1** ist rechts ein erfindungsgemäßes Kupplungsteil I dargestellt, wie es grundsätzlich für sich allein verwendbar ist. Es besteht aus einem zylindrischen Kupplungskörper 8, an dessen Innenwandung ein Innengewindestück 7 befestigt ist, das nach außen zur Innenwandung Durchbrüche als Kanäle 9 besitzt. Endseitig ist ein Anschluß 21 für eine Schlauchleitung dargestellt.

In das Innengewindestück ist eine Platte 3 eingeschraubt, die eine Ringnut 22 aufweist. Von der gegenüberliegenden Seite ist eine Hülse 6 eingeschraubt, die mit einem ringförmigen Anschlag 23 versehen ist, der auf dem Rand der Hülse 6 aufliegt.

An der Innenwandung der Hülse 6 liegt der zylindrische Bereich 10 eines Faltenbalges 2 an, der von innen durch eine metallische Feder 1 gegen die Hülseninnenwandung gehalten wird.

Die Feder 1 stützt sich gegen die Platte 3 ab und drückt einen Ventilkegel 4 gegen einen Gegenkegel 25 des Ventilkörpers 8. Ventilkegel 4, Faltenbalg 2 und zylindrischer Fortsatz 24 sind einstücking aus PTFE gefertigt (gedreht), wobei an dem der Platte 3 zugekehrten Ende an den Bereich 10 ein Kragen 5 angeformt ist, der zwischen der Hülse 23 und der Platte 3 durch Verschraubung der beiden Teile gegeneinander die Feder 1 abdichtend gehalten ist.

Am Ventilkegel 4 gegenüberliegenden Ende des Faltenbalges 2 ist unterhalb des Kragens 5 ein zum zylindrischen Bereich 10 koaxialer Rand 29 angeordnet, der in die Ringnut 22 der Platte 3 eingreift und so den zylindrischen Fortsatz 10 bei der Montage, insbesondere bei der Verschraubung der Platte 3 gegen die Hülse 6 im Innengewindestück 7 fixiert. Zusätzlich kann in die Ringnut 22 ein Dichtring eingelegt sein.

Wie oben schon gesagt, kann ein derartiges Kupplungsteil für sich allein verwendet werden, wobei ein Gegenstück lediglich einen zentralen Dorn oder dergleichen aufzuweisen braucht, um beim Kuppeln den Ventilkegel gegen die Federspannung zu öffnen. Vorgezogen wird jedoch die hier dargestellte Lösung, bei der ein gleichwirkendes Teil II mit dem Teil I zusammengeschlossen wird. Zu diesem Zweck weist das Kupplungsteil I eine Überwurfmutter 26 auf, die über das Gewinde 27 des Teils II beide miteinander verbindet. Die Teile I und II besitzen über den Kegel 4 hinausragende Fortsätze 17, die in den Kupplungsmündungen 24 ruhen.

Die Kupplungsmündungen 24 bzw. die Fortsätze 17 und die Verschraubung 26, 27 sind so bemessen, daß die Kegel 4 von den Gegenkegeln 25 abheben und den Strömungsweg für die Flüssigkeit freigeben.

Ein sicheres gleichmäßiges Öffnen beider Kegel 4 wird dabei durch einen Anschlag 12 gewährleistet, dem im Kupplungsteil II eine schwächere Feder 1' zugeordnet ist, die zunächst von der Feder 1 gegen diesen zurückgedrückt wird. Der Anschlag 12 kann in der Platte 3' in einem Gewinde verstellbar angebracht sein.

Der Anschlag 12 kann direkt gegen den Kegel 4' auslaufen, in der Darstellung besitzt der Kegel 4' eine Stößel 14, gegen den der Anschlag 12 in der Offen-Stellung der Kupplungsteile I und II anliegt.

Sämtliche flüssigkeitsführenden Teile (nicht Federn 1 und 1') sind aus Kunststoff (PTFE) ausgeführt, so daß eine hohe Schließdichtigkeit gewährleistet ist.

Um diese noch zu erhöhen können O-Ringe 27 (ebenfalls aus PTFE) zusätzlich verwendet werden.

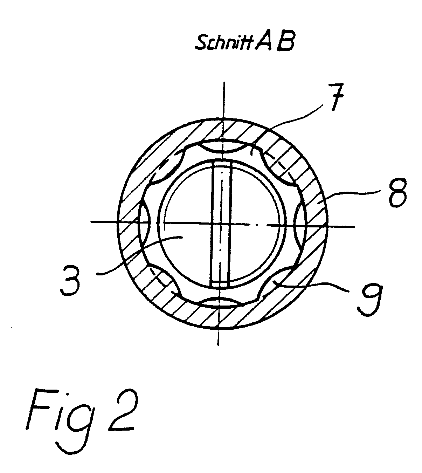

**Fig. 2** zeigt den Schnitt gemäß Abbildung in Fig 1. Man erkennt den Kupplungskörper 8 sowie das mit diesem verbundene Innengewindestück 7, das zur Innenwandung des Kupplungskörpers Kanäle 9 für die Flüssigkeitsführung freiläßt. In das Innengewindestück 7 ist die Platte 3 eingeschraubt. Die Montierbarkeit der Teile kann z.B. dadurch gewährleistet werden, daß entweder das Innengewindestück lösbar mit dem Kupplungskörper 8 verbunden oder aber dieses zwischen dem Innengewindestück 7 und dem Gegenkegel 25 (Fig 1) teilbar ausgebildet ist.

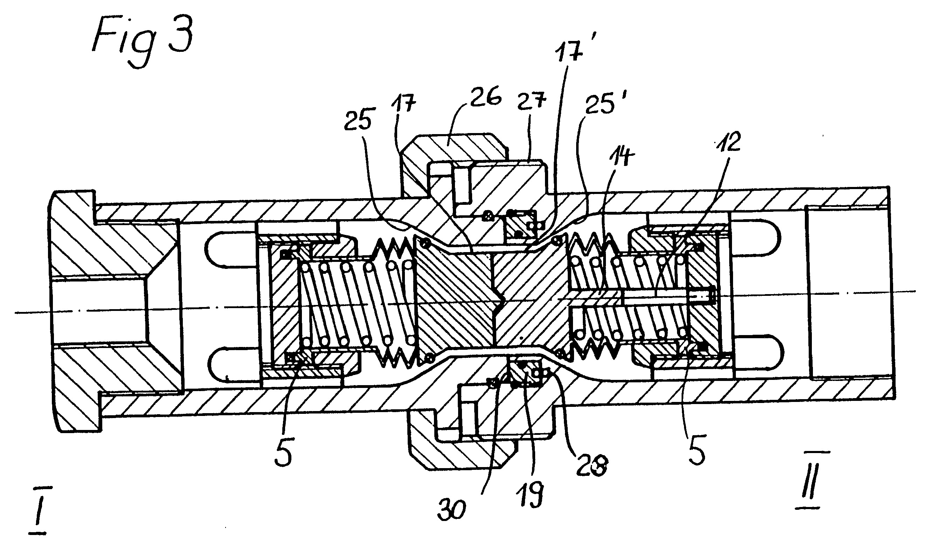

**Fig. 3** zeigt die zwei Kupplungsteile I und II in geschlossenem Zustand unter Bildung eines ringförmigen eingeschnürten Spalts um die Ventilkegel 4, 4' und die Fortsätze 17, 17'. Der Stößel 14 liegt gegen den Anschlag 12 an, die Überwurfmutter 26 ist mit dem Gewinde 27 verschraubt.

Beim Öffnen der Kupplung bewegen sich infolge des notwendigen Schließweges zunächst die Kupplungskörper 8 voneinander weg, bis die Kegel 4, 4' an ihren Gegenkegeln 25 anliegen. Dabei entsteht zwischen den Kupplungskörpern ein Spalt, der mit Flüssigkeit unerwünscht gefüllt wird, das Totvolumen vergrößert.

Um dieses wesentlich einzuschränken weist das Kupplungsteil II eine gefederten Dichtring 19 auf, der in einem Ringraum 30 liegt und von einer Feder 28 vorgespannt ist.

Gegen den Dichtring 19 des Kupplungsteils II liegt ein Flansch 28 des Kupplungsteils I an.

Öffnet man nunmehr die Verschraubung 26, 27, so wird der Dichtring 19 von der Feder 28 herausgeschoben und liegt bis zum vollständigen Öffnen an der Stirnfläche des Flansches an, so daß ein radial nach außen reichen des Totvolumen nicht mit Flüssigkeit gefüllt werden kann.

## Patentansprüche

1. Kupplung für Rohre oder Schläuche bestehend aus zwei Elementen, welche mit einer Schraub-, Steck- oder Klemmverbindung flüssigkeitsdicht aneinander befestigt werden können, die Ventilvorrichtungen enthalten, welche im gekuppelten Zustand die Rohre abdichten und aus einem Ventilkegel bestehen, der ungekuppelt durch eine Feder gegen den Innenkegel des Ventilsitzes gedrückt und durch ein Gegenstück des anderen Elements gegen die Feder geöffnet wird, die sich gegen eine Platte im Kupplungskörper abstützt, wobei die Feder in einem Faltenbalg angeordnet ist der einen Kragen aufweist und mit Hilfe einer Hülse gegen eine Platte gehalten ist, gekennzeichnet durch die folgenden Merkmale :

a) der Faltenbalg (2) erstreckt sich von der Platte (3) bis zum Ventilkegel (4) ist flüssigkeitsumspült und dichtet die Feder gegen die Flüssigkeit ab.

b) Hülse (6) und Platte (3) weisen Außengewinde auf und sind unter Verklemmen des Kragens (5) zwischen sich in ein Innengewindestück (7) eingeschraubt, wobei das Innengewindestück (7) mit dem Kupplungskörper (8) unter Freilassung von Kanälen (9) verbunden ist.

c) Faltenbalg (2) und Kragen (5) sind ebenso wie alle mit Flüssigkeit in Berührung kommende Teile aus Kunststoff ausgebildet.

2. Kupplung nach Anspruch 1 dadurch gekennzeichnet, daß Ventilkegel (4) und Faltenbalg (2) einstückig aus einem Kunststoffblock herausgearbeitet, insbesondere gedreht sind.

3. Kupplung nach Anspruch 1 oder 2, dadurch gekennzeichnet, daß der Faltenbalg (2) oberhalb des Kragens (5) einen zylindrischen Bereich (10) aufweist, der an der Innenwandung der Hülse (6) anliegt.

4. Kupplung nach mindestens einem der besprüche 1-3, dadurch gekennzeichnet, daß sie aus zwei gleichwirkenden Teilen (I und II) besteht, wobei die Feder des Gegenstückes (II) schwächer ausgelegt ist als diejenige des Kupplungsteiles (I) und daß auf der Platte (11) des Gegenstückes (II) ein Anschlag (12) angeordnet ist, der mit dem Ventilkegel gegebenenfalls über einen in den Faltenbalg (2) hineinragenden Stößel (14) zusammenwirkt.

5. Kupplung nach mindestens einem der besprüche 1-4 dadurch gekennzeichnet, daß der Anschlag (12) in ein Sackloch (15) der Platte (3') eingesetzt oder eingeschraubt ist.

6. Kupplung nach mindestens einen der Ansprüche 1-5 dadurch gekennzeichnet, daß die Hülse (6) einen gegen das Innengewindestück (7) gerichteten Anschlag (23) aufweist.

7. Kupplung nach mindestens einem der Ansprüche 1-6 dadurch gekennzeichnet, daß die Ventilkegel (4, 4') zur Totvolumenverringerung etwa längsachsparallele Fortsätze (17, 17') besitzen, deren Gesamtlänge größer ist als der Schließweg.

8. Kupplung nach mindestens einem der Ansprüche 1-7 dadurch gekennzeichnet, daß die Platte (3) eine Ringnut (22) aufweist, in die der untere Rand (29) des Faltenbalges (2) unterhalb des Kragens (5) eingreift.

9. Kupplung nach mindestens einem der Ansprüche 1-8 dadurch gekennzeichnet, daß in einer Ausnehmung der Kupplungsteile (I oder II) ein gefederter Dichtring (19) eingepaßt ist, dem ein gegenüberliegendes Rohrstück zugeordnet ist, das beim Schließen den Ring (19) zurückschiebt.

## Claims

1. Coupling for pipes and tubes consisting of two elements, which can be connected with one another with a screw, plug or clamp connection, which contain valve means which, in the coupled state, seal off the pipes and consist of a valve cone which, uncoupled, is pressed by a spring against the inner cone of the valve seating and is opened by a counterpiece of the other element against the spring which is supported against a plate in the coupling body, whereby the spring is arranged in a bellows which has a collar and, with the help of a sleeve, is held against a plate, characterised by the following features :

a) the bellows (2) extends from the plate (3) to the valve cone (4), is flowed around by liquid and seals off the spring against the liquid,

b) sleeve (6) and plate (3) have external threads and, with clamping of the collar (5), are screwed into an internally threaded piece (7), whereby the internally threaded piece (7) is connected with the coupling body (8) with the leaving free of canals (9),

c) bellows (2) and collar (5) are, like all parts coming into contact with liquid, made of synthetic material.

2. Coupling according to claim 1, characterised in that valve cone (4) and bellows (2) are made in one piece from a block of synthetic material, especially are turned.

3. Coupling according to claim 1 or 2, characterised in that the bellows (2) has, above the collar (5), a cylindrical region (10) which lies against the inner wall of the sleeve (6).

4. Coupling according to at least one of claims 1-3, characterised in that it consists of two equally acting parts (I and II), whereby the spring of the counterpiece (II) is made weaker than that of the coupling part (I) and that on the plate (3') of the counterpiece (II) is arranged a stop (12) which cooperates with the valve cone possibly via a striker (14) projecting into the bellows (2).

5. Coupling according to at least one of claims 1-4, characterised in that the stop (12) is placed in or screwed into a pocket hole (15) of the plate (3').

6. Coupling according to at least one of claims 1-5, characterised in that the sleeve (6) has a stop (23) directed against the internally threaded piece (7).

7. Coupling according to at least one of claims 1-6, characterised in that the valve cones (4, 4') possess, for the dead volume reduction, substantially longitudinally parallel extensions (17, 17'), the total length of which is greater than the closure path.

8. Coupling according to at least one of claims 1-7, characterised in that the plate (3) has a ring groove (22) in which engages the lower edge (29) of the bellows (2) below the collar (5).

9. Coupling according to at least one of claims 1-8, characterised in that, in a recess of the coupling parts (I and II), is fitted a spring-loaded sealing ring (19) with which is associated an oppositely-lying pipe piece which, in the case of connection, pushes back the ring (19).

## Revendications

1. Raccord pour tubes ou manchons consistant en deux éléments, qui peuvent être fixés l'un à l'autre de manière étanche au moyen d'un accouplement par vissage, insertion ou serrage, contenant des dispositifs d'obturation qui en position d'accouplement rendent les tuyaux étanches et qui consistent en un cône d'obturation qui en position désaccouplée est comprimé par un ressort contre le contre-cône du siège du clapet et qui est ouvert par une contre-pièce de l'autre élément agissant en opposition avec le ressort s'appuyant contre une plaquette située dans le corps de l'accouplement, le ressort étant disposé dans un soufflet qui présente une collerette et qui est maintenu contre une plaquette à l'aide d'une douille, **caractérisé en ce que** :

a) le soufflet (2) s'étend depuis la plaquette (3) jusqu'au pointeau d'obturation (4), baigne dans le fluide et protège le ressort contre le contact du fluide ;

b) la douille (6) et la plaquette (3) présentent un filet extérieur et sont vissées l'une à l'autre dans une pièce à filetage intérieur (7) lors du serrage de la collerette (5), la pièce à filetage intérieur (7) étant reliée au corps d'obturation (8) en laissant libres des canaux (9) ;

c) le soufflet (2) et la collerette (5) sont réalisés en matériau synthétique, de même que toutes les pièces venant au contact du fluide

2. Raccord selon la revendication 1, **caractérisé en ce que** le pointeau d'obturation (4) et le soufflet (2) sont usinés, et en particulier tournés, à partir d'un seul et unique bloc de matériau synthétique.

3. Raccord selon la revendication 1 ou 2, **caractérisé en ce que** le soufflet (2) présente au-dessus de la collerette (5) une partie cylindrique (10) qui repose contre la paroi intérieure de la douille (6).

4. Raccord selon l'une au moins des revendications 1-3, **caractérisé en ce qu'**il consiste en deux pièces (I et II) fonctionnant de manière similaire, le ressort de la contre-pièce (II) étant plus faible que celui de la pièce (I) du raccord, et **en ce que** sur la plaquette (11) de la contre-pièce (II) est disposée une butée (12) qui collabore avec le pointeau d'obturation, éventuellement par l'intermédiaire d'une tige (14) débordant à l'intérieur du soufflet (2).

5. Raccord selon l'une au moins des revendications 1 -4, **caractérisé en ce que** la butée (12) est insérée ou vissée dans un trou aveugle (15) de la plaquette (3').

6. Raccord selon l'une au moins des revendications 1-5, **caractérisé en ce que** la douille (6) présente une butée (23) dirigée contre la pièce à filetage intérieur (7).

7. Raccord selon l'une au moins des revendications 1-6, **caractérisé en ce qu'**en vue de la réduction du volume mort les pointeaux d'obturation (4, 4') possèdent des prolongements (17, 17') dans la direction de l'axe longitudinal, et dont la longueur totale est supérieure au déplacement de fermeture.

8. Raccord selon l'une au moins des revendications 1-7, **caractérisé en ce que** la plaquette (3) présente une rainure annulaire (22) qui reprend la bordure inférieure (29) du soufflet (2), sous la collerette (5).

9. Raccord selon l'une au moins des revendications 1-8, **caractérisé en ce qu'**un anneau d'étanchéité (19) à ressort, auquel est raccordée une pièce de tuyau qui s'adapte dans un évidement de la pièce (I) ou (II) du raccord et se déplace en arrière lors de la fermeture de l'anneau d'étanchéité (19).

Fig 1

EP 0 344 582 B1

Schnitt $A\,B$

Fig 2

Fig 3

EP 0 344 582 B1